# EUROPÄISCHE PATENTSCHRIFT

(11) **EP 3 939 771 B1**
(45) Veröffentlichungstag und Bekanntmachung des Hinweises auf die Patenterteilung: **07.06.2023**
(21) Anmeldenummer: 21183078.1
(22) Anmeldetag: 01.07.2021
(51) Int. Cl.: B29C 49/58, B29C 49/06, B29C 49/12, B29C 49/64, B29K 67/00, B29L 31/00, B29C 49/46

(54) **VORRICHTUNG ZUM UMFORMEN VON KUNSTSTOFFVORFORMLINGEN ZU KUNSTSTOFFBEHÄLTNISSEN MIT VORFORMLINGSKÜHLUNG**
DEVICE FOR REFORMING PLASTIC PREFORMS INTO PLASTIC CONTAINERS WITH PREFORM COOLING
DISPOSITIF DE TRANSFORMATION DE PRÉFORMES EN MATIÈRE PLASTIQUE EN RÉCIPIENTS EN MATIÈRE PLASTIQUE PAR REFROIDISSEMENT DES PRÉFORMES

(30) Priorität: 13.07.2020 DE 102020118469
(43) Veröffentlichungstag der Anmeldung: 19.01.2022
(73) Patentinhaber: KRONES AG, 93073 Neutraubling (DE)
(72) Erfinder: Hoellriegl, Thomas, 93073 Neutraubling (DE); Stiegler, Markus, 93073 Neutraubling (DE); Apfelbacher, Oliver, 93073 Neutraubling (DE); Kulzer, Markus, 93073 Neutraubling (DE); Huettner, Gerald, 93073 Neutraubling (DE)
(74) Vertreter: Bittner, Bernhard

(56) Entgegenhaltungen:
- EP-A1- 3 064 336
- US-A1- 2002 053 760
- US-A1- 2015 231 812

## Beschreibung

Die vorliegende Erfindung bezieht sich auf eine Vorrichtung und ein Verfahren zum Umformen von Kunststoffvorformlingen zu Kunststoffbehältnissen. In der Getränke-herstellenden Industrie ist es bekannt, dass erwärmte Kunststoffvorformlinge durch Beaufschlagen in einem fließfähigen Medium, insbesondere Blasluft zu Behältnissen umgeformt werden.

Derartige Vorrichtungen und Verfahren sind in den Patentschriften US2002/053760A1, EP3064336A1 und US2015/231812A1 beschrieben.

Die folgende Erfindung bezieht sich insbesondere auf solche Vorrichtungen, welche Blasluft zum Expandieren der Kunststoffvorformlinge verwenden. Es wird jedoch darauf hingewiesen, dass eine Anwendung auch möglich ist bei solchen Vorrichtungen, welche die Kunststoffvorformlinge unmittelbar mit einer Flüssigkeit, insbesondere einem abzufüllenden Getränk befüllen. Im Stand der Technik werden daher die Vorformlinge mit Hilfe einer Blasdüse durch Druck aufgeblasen. Dabei dient die Blasdüse im Bereich des Mündungsabschnitts auch als Dichtungselement. Der aufgeblasene Behälter wird mittels eines Kühlmediums (vorzugsweise Kühlwasser) über eine Blasform gekühlt und mit Druckluft an diese geformt und angepresst.

Dabei wird dem Behältnis, beziehungsweise dessen Material, beispielsweise PET, an der äußeren Kontaktfläche die Wärme entzogen. Die Druckluft zum Blasen wird beim Aufblasen vorzugsweise durch die Blasdüse zwischen einem Reckdorn und/oder einer Reckstange und dem Innenteil der Blashülse zugeführt und beim Entlüften auch auf diese Weise wieder zurückgeführt, beziehungsweise über ein Ventil abgelassen, beziehungsweise entlüftet.

Bei hoher Maschinenleistung kann es sein, dass die Kühlung nicht ausreichend ist, was dazu führt, dass die Formstabilität abnimmt und das Behältnis bei der Entnahme aus der Form verformt wird. Speziell in Formbereichen, bei denen die Wanddicke dicker ist, beziehungsweise nicht ausreichend verstreckt werden kann, ist die Kühlung zu kurz und/oder nicht ausreichend. Diese tritt vorzugsweise im Boden- und im Mundstücksschulterbereich (direkt unter einem Tragring) auf.

Das Expandieren der Kunststoffvorformlinge erfolgt üblicherweise über mehrere Druckstufen beispielsweise eine Vorblasstufe und eine Fertigblasstufe. Die Vorblas- und Fertigblasluft wird über einen Blaskolbenblock zugeführt, in der sich ein Blaskolben befindet. In dem Blaskolben strömt die Luft durch eine Führungsbuchse anschließend durch eine Düse in das Mundstück. Die Vorblas- und Fertigblasluft wird über einen Blaskolbenblock zugeführt, in dem sich ein Blaskolben befindet. In dem Blaskolben strömt die Luft durch eine Führungsbuchse und anschließend durch eine Düse in das Mundstück. Im Stand der Technik kann es hier beispielsweise zu einer turbulenten Luftströmung kommen und dadurch können Verluste in der Einströmgeschwindigkeit und dadurch auch Verluste in der Prozesszeit entstehen. Daneben wird auf diese Weise teilweise auch ein reduzierter Kühleffekt am Mundstück verursacht. Dies ist aufgrund der immer weiter steigenden Stationsleistungen von zunehmender Bedeutung.

Der vorliegenden Erfindung liegt daher die Aufgabe zugrunde, eine verbesserte Kühlung der Kunststoffvorformlinge während dieses Expansionsprozesses zu erreichen. Daneben sollen vorteilhaft auch die Prozesszeiten verkürzt werden. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Blasform auf, welche einen Hohlraum ausbildet, innerhalb dessen die Kunststoffvorformlinge zu den Kunststoffbehältnissen expandierbar sind. Weiterhin ist eine Beaufschlagungseinrichtung vorgesehen, welche dazu geeignet und bestimmt ist, die Kunststoffvorformlinge mit einem fließfähigen Medium und insbesondere einem gasförmigen Medium zu beaufschlagen, um sie zu Expandieren. Dabei ist die Beaufschlagungseinrichtung an einen Mündungsbereich der Kunststoffvorformlinge anlegbar, um diese mit dem fließfähigen Medium zu beaufschlagen.

Erfindungsgemäß bildet die Beaufschlagungseinrichtung wenigstens einen ersten Strömungskanal für das fließfähig Medium aus, der wenigstens einen Anteil des fließfähigen Mediums an einer Innenwand des Mündungsbereichs leitet und/oder lenkt, um diese Innenwand zu temperieren und insbesondere zu kühlen.

Es wird daher eine Blasdüse vorgeschlagen, welche zumindest einen Anteil und bevorzugt genau einen Anteil der Blasluft an den Innenbereich des Mündungsbereichs des Kunststoffvorformlings führt. Auf diese Weise wird bereits während des Expansionsvorgangs eine Kühlung erreicht und insbesondere eine Kühlung in denjenigen kritischeren Bereichen, in denen die Wandstärke des Kunststoffvorformlings höher ist.

Bei einer bevorzugten Ausführungsform weist die Blasform zwei Seitenteile auf, sowie ein Bodenteil. Diese Teile sind bezüglich einander zum Öffnen und Schließen der Blasform bewegbar. Auf diese Weise kann ein Kunststoffvorformling in die Blasform eingegeben werden und nach dem Expansionsvorgang auch wieder das expandierte Behältnis aus der Blasform entnommen werden.

Bei einer bevorzugten Ausführungsform weist die Vorrichtung auch eine Reckstange beziehungsweise allgemein einen stangenartigen Körper auf, der in die Kunststoffvorformlinge einführbar ist, um sie in ihrer Längsrichtung zu dehnen. Dabei ist es möglich, dass ein Anteil der Blasluft (oder allgemein des Expansionsmediums) zwischen dem Mündungsbereich des Kunststoffvorformlings und diesem stangenartigen Körper transportiert beziehungsweise geführt wird. Auch wäre es möglich, dass ein Anteil der Blasluft durch den stangenartigen Körper selbst transportiert wird. Bevorzugt ist daher der stangenartige Körper als Hohlstange ausgebildet.

Bevorzugt ist die Beaufschlagungseinrichtung als Blasdüse ausgebildet. Diese kann an einem Mündungsbereich des Kunststoffvorformlings angelegt werden, um diesen aufzublasen. Besonders bevorzugt wird dabei diese Blasdüse gegenüber einem Bereich des Kunststoffvorformlings wie insbesondere dessen Tragring abgedichtet. Es wäre jedoch auch eine Abdichtung gegenüber dem Mündungsrand des Kunststoffvorformlings möglich.

Wie unten genauer erläutert, kann die Blasdüse Bohrungen und/oder Langlöcher enthalten, durch welche die Druckluft strömen kann. Insbesondere erlauben dabei diese Bohrungen und/oder Langlöcher ein Austreten der Blasluft auch in einer radialen Richtung, um so die Blasluft an den Mündungsabschnitt des Kunststoffvorformlings zu leiten und um dadurch den Mündungsabschnitt von innen zu kühlen, wobei dadurch ein Kühleffekt an der Innenwand entsteht.

Das Kühlmedium strömt bevorzugt von oben nach unten durch die in der Blasdüse enthaltenen Bohrungen, welche beispielsweise direkt zwischen der Mündungsinnenwand und einer Führungshülse angeordnet sind, in die aufzublasende Flasche.

Bevorzugt dichtet die Beaufschlagungseinrichtung beziehungsweise Blasdüse am Mündungsabschnitt vorzugsweise außen ab.

Beim Entlasten beziehungsweise Entweichen der Luft strömt die enthaltene Druckluft wieder direkt an der Innenwandung vorbei und kühlt diese Oberfläche durch die vorbeiströmende Luft und die dadurch erzwungene Konvektion.

Des Weiteren tritt durch den Druckabbau beziehungsweise die Expansion der Druckluft ein weiterer Kühleffekt ein.

Durch ein Anheben der Blasdüse während des Entlüftens kann diese noch schneller entlüftet werden und gleichzeitig den physikalischen "Joule-Thompson-Effekt" ausnutzen.

Je größer der Druckabbau und je größer die Luftströmung desto größer ist die Kühlung im Mündungsbereich.

Dabei wird vorzugsweise darauf geachtet, dass die Druckluft beim Ein- und Ausströmen an dem Bereich vorbeiströmen muss, wo die meiste Wärme vorhanden ist und entsprechend auch die größte Kühlung erforderlich ist.

Vorteilhaft erfolgt ein Anheben der Blasdüse von dem Kunststoffvorformling um einen Bereich von mehr als 0,2mm, vorzugsweise mehr als 0,4mm, vorzugsweise mehr als 0,6mm, vorzugsweise mehr als 0,8mm und vorzugsweise mehr als 1 ,0mm. Vorzugsweise erfolgt beim Anheben der Blasdüse um weniger als 30mm, bevorzugt um weniger als 20mm, bevorzugt um weniger als 15mm und bevorzugt um weniger als 10mm.

Durch die vorgeschlagene Vorgehensweise wird eine bessere Kühlung des Mündungsbereichs erzielt und somit die Formstabilität erhöht. Die fertig geblasene Flasche kann schneller aus der Blasform entnommen werden und auf diese Weise kann die Maschinenleistung gesteigert werden. Auch können schwierige oder schwere Behälter stabiler verarbeitet werden.

Im Rahmen von Untersuchungen konnte gezeigt werden, dass durch die Vorbeiführung der einströmenden und/oder der ausströmenden Blasluft an der Innenwandung des Kunststoffvoformlings ein erheblicher Kühleffekt erreicht werden kann.

Bei einer unten genauer beschriebenen vorteilhaften Ausführungsform ist eine geschlitzte Düse vorgesehen, welche auch an ihrer Unterseite geschlossen werden kann (jedoch auch vollständig oder teilweise geöffnet sein kann, ggfs. mit einem verringerten Öffnungsquerschnitt.

Auf diese Weise tritt ein Kühleffekt des Mundstücks auf, wobei die Luft bevorzugt an dessen Oberfläche reibt. Bei der Auslegung derartiger Blasdüsen werden bevorzugt unterschiedliche Kriterien berücksichtigt, wie beispielsweise die gewünschte Stationsleistung oder auch das Gewicht des jeweiligen Mundstücks des Kunststoffvorformlings, welches im Laufe der letzten Jahre weiterhin abgenommen hat. Die unten beschriebene vorteilhafte Schlitzgestaltung erlaubt eine direkte Kühlung des Mundstücks beim Einströmen der Luft.

Bei einer bevorzugten Ausführungsform bildet die Beaufschlagungseinrichtung wenigstens zwei wenigstens teilweise voneinander getrennte Strömungspfade für das fließfähige Medium aus, wobei wenigstens einer dieser Strömungspfade derart ausgebildet ist, dass er wenigstens einen Anteil des fließfähigen Mediums an eine Innenwandung des Mündungsbereichs leitet und/oder lenkt.

Bei einer bevorzugten Ausführungsform ist der zweite Strömungspfad derart ausgebildet, dass er das fließfähige Medium nicht auf eine Innenwandung des Mündungsbereichs lenkt. Vielmehr lenkt bevorzugt dieser zweite Strömungspfad die Luft unmittelbar in das Innere des Behältnisses, beispielsweise in einer Vorzugsrichtung, welche sich parallel zu einer Längsrichtung des zu expandierenden Kunststoffvorformlings erstreckt. Die durch diesen zweiten Strömungspfad gelangenden Blasluft berührt vorteilhaft nicht die Innenwandung des Kunststoffvorformlings und insbesondere nicht die Innenwandung im Bereich des Mündungsabschnitts des Kunststoffvorformlings.

Bei einer weiteren bevorzugten Ausführungsform ist die Beaufschlagungseinrichtung derart ausgebildet, dass auch ein Bodenbereich des Kunststoffvorformlings gekühlt werden kann. Dies kann beispielsweise dadurch erreicht werden, dass die Reckstange derart ausgebildet ist, dass auch ein bestimmter Anteil der Blasluft durch diese hindurch direkt in ein Bodenbereich des Kunststoffvorformlings geführt wird.

Bei einer weiteren bevorzugten Ausführungsform weist die Beaufschlagungseinrichtung einen während der Expansion des Kunststoffvorformlings in diesem Kunststoffvorformling ragenden röhrenförmigen Körper auf, der demjenigen Strömungspfad des fließfähigen Mediums ausbildet, der nicht auf die Innenwandung der Mündungsbereiche gelangt.

Dieser röhrenförmige Abschnitt weist dabei eine Länge auf, die geringer ist als die Länge des zu expandierenden Kunststoffvorformlings, bevorzugt geringer als die Halbe Länge des zu expandierenden Kunststoffvorformlings, bevorzugt geringer als ein Drittel der Länge des zu expandierenden Kunststoffvorformlings. Bevorzugt ist die Länge des röhrenförmigen Abschnitts derart gewählt, dass sie sich wenigstens entlang eines (Außen)Gewindes des Kunststoffvorformlings erstreckt. Bevorzugt erstreckt sich der röhrenförmige Körper wenigstens bis zu der Position eines Tragrings des Kunststoffvorformlings (bezogen auf dessen Höhenposition.

Bevorzugt weist der röhrenförmige Körper eine Länge auf, die größer ist als 3mm, bevorzugt größer als 5mm, bevorzugt größer als 8mm, bevorzugt größer als 10mm, bevorzugt größer als 15mm. Bevorzugt weist der röhrenförmige Körper eine Länge auf, die kleiner ist als 80mm, bevorzugt kleiner als 70mm, bevorzugt kleiner als 60mm, bevorzugt kleiner als 50mm.

Bevorzugt ist dabei dieser röhrenförmige Körper, beziehungsweise röhrenförmige Abschnitt, rotationssymmetrisch bezüglich einer Längsachse der Beaufschlagungseinrichtung ausgebildet.

Bei der Längsachse der Beaufschlagungseinrichtung handelt es sich insbesondere auch um die Längsrichtung der zu expandierenden Kunststoffvorformlinge.

Bevorzugt weist die Vorrichtung eine Antriebseinrichtung auf, welche diese Beaufschlagungseinrichtung, insbesondere entlang dieser Längsachse, in Richtung des Kunststoffvorformlings bewegt, beziehungsweise auf diesen zustellt.

Bei einer weiteren vorteilhaften Ausführungsform verläuft der erste Strömungspfad wenigstens teilweise radial außerhalb des zweiten Strömungspfads.

Bei einer bevorzugten Ausführungsform verlaufen die Strömungspfade wenigstens abschnittsweise gemeinsam. So ist es möglich, dass sich die Strömungspfade an einem bestimmten Bereich aufteilen. So kann beispielsweise der erste Strömungspfad im Wesentlichen durch den röhrenförmigen Körper verlaufen und der erste Strömungspfad hiervon beispielsweise durch Öffnungen abweichen.

Bei einer bevorzugten Ausführungsform umgibt der erste Strömungspfad den zweiten Strömungspfad in einer Umfangsrichtung der Beaufschlagungseinrichtung. Bevorzugt umgibt der erste Strömungspfad den zweiten Strömungspfad vollständig in dieser Umfangsrichtung. Dies kann dadurch erreicht werden, dass der röhrenförmige Körper Öffnungen aufweist, durch welche das Medium d.h. insbesondere die Blasluft austreten (bzw. beim Zurückströmen eintreten) kann, um so außerhalb des zweiten Strömungspfads zu sein.

Daneben wäre es auch möglich, dass der zweite Strömungspfad durch den röhrenförmigen Körper gebildet wird und der erste Strömungspfad durch den Zwischenraum zwischen einer Außenwandung des röhrenförmigen Körpers und einer äußeren Umfangswandung.

Bei einer bevorzugten Ausführungsform ist der erste Strömungspfad, beziehungsweise erste Strömungspfad, durch einen Abstand zwischen dem röhrenförmigen Körper und einer diesen röhrenförmigen Körper umgebenden Wand gegeben.

Dabei können der röhrenförmige Körper und die umgebende Wandung durch Stege und insbesondere sich radial erstreckende Stege miteinander verbunden sein.

Daneben können diese radialen Stege auch dazu dienen, um die Blasdüse zu zentrieren. Auf diese Weise kann bevorzugt noch ein vorgegebener Anteil an Zentrierflächen erhalten bleiben.

Bei einer weiteren Ausführungsform weist der röhrenförmige Körper wenigstens eine Öffnung auf, durch welche das Medium in einer radialen Richtung austreten kann, wobei diese Öffnung bevorzugt einen Abschnitt des ersten Strömungspfads ausbildet.

Dies bedeutet, dass zumindest ein Teil dieser Blasluft durch diese Öffnung austreten und damit zumindest auch in einer radialen Richtung bezüglich der Beaufschlagungseinrichtung. Bevorzugt weist der röhrenförmige Körper eine Umfangswandung auf. Diese weist bevorzugt auch eine endseitige Hauptöffnung auf. Daneben ist bevorzugt in dieser Umfangswand eine weitere Öffnung angeordnet. Damit erstreckt sich diese Öffnung auch in der Längsrichtung des röhrenförmigen Körpers, beziehungsweise auch in der Längsrichtung des zu expandierenden Kunststoffvorformlings.

Bei einer weiteren bevorzugten Ausführungsform ist die wenigstens eine Öffnung ein Langloch. Bevorzugt erstreckt sich dieses Langloch zumindest auch in der Längsrichtung der Beaufschlagungseinrichtung. Daneben kann dieses Langloch sowohl gerade als auch schräg (bzgl. der Längsrichtung der Kunststoffvorformlinge) verlaufen.

Bei einer bevorzugten Ausführungsform sind mehrere dieser Öffnungen vorgesehen. Bevorzugt sind diese Öffnungen gleichmäßig, beziehungsweise symmetrisch in einer Umfangsrichtung des röhrenförmigen Körpers verteilt.

Bei einer bevorzugten Ausführungsform weist die Beaufschlagungseinrichtung ein Luftlenkmittel auf, welches Luft in den Mündungsbereich des Kunststoffvorformlings drängt. Dabei kann es sich beispielsweise um eine Art Spoiler handeln, welcher die Luft bevorzugt wenigstens teilweise auf diesem Bereich lenkt.

Bei einer bevorzugten Ausführungsform weist die Beaufschlagungseinrichtung ein Dichtmittel auf, um gegenüber einem Tragring diese Kunststoffvorformlinge abzudichten. Dies bedeutet, dass eine Abdichtung in diesem Fall nicht gegenüber einem Mündungsrand des Kunststoffvorformlings erfolgt, sondern gegenüber dem Tragring, den solche Kunststoffvorformlinge üblicherweise aufweisen.

Besonders bevorzugt ist die wenigstens eine seitliche Öffnung, beziehungsweise sind diese seitlichen Öffnungen in einem unteren, das heißt weiter in dem Vorformling ragenden Bereich des röhrenförmigen Körpers ausgebildet. So können beispielsweise die Öffnungen in einer unteren Hälfte bevorzugt einem unteren Drittel des röhrenförmigen Körpers angeordnet sein. Bevorzugt weist der röhrenförmige Körper einen ersten Abschnitt auf, der keine Öffnungen aufweist, sowie einen in einer Längsrichtung darunter liegenden Abschnitt, der wenigstens eine, bevorzugt eine Vielzahl von Öffnungen aufweist.

Die vorliegende Erfindung ist weiterhin auf eine Umformungseinrichtung zum Umformen von Kunststoffvorformlingen zu Kunststoffbehältnissen gerichtet. Diese Umformungseinrichtung weist einen bewegbaren und insbesondere drehbaren Träger auf, an dem bevorzugt eine Vielzahl von Vorrichtungen der oben beschriebenen Art angeordnet ist.

Die vorliegende Erfindung ist weiterhin auf eine Beaufschlagungseinrichtung zum Beaufschlagen von Kunststoffvorformlingen mit einem fließfähigen und insbesondere gasförmigen Medium gerichtet, um diese Kunststoffvorformlinge zu expandieren. Diese Beaufschlagungseinrichtung weist einen ringförmigen Abdichtabschnitt auf, der dazu geeignet und bestimmt ist, während der Beaufschlagung des Kunststoffvorformlings mit dem gasförmigen Medium den in den Kunststoffvorformling gelangenden Luftstrom gegenüber einer Umgebung abzudichten. Weiterhin weist die Beaufschlagungseinrichtung einen röhrenförmigen Körper auf, der während des Expansionsvorgangs wenigstens teilweise in den zu expandierenden Kunststoffvorformling hineinragt.

Erfindungsgemäß weist die Beaufschlagungseinrichtung wenigstens einen ersten Strömungskanal bzw. Strömungspfad für das fließfähige Medium auf, beziehungsweise bildet diesen aus, der wenigstens einen Anteil des fließfähigen Mediums an eine Innenwandung des Mündungsbereichs leitet und/oder lenkt, um diese Innenwandung zu kühlen.

Damit ist die Erfindung auch auf eine Beaufschlagungseinrichtung, beziehungsweise eine Blasdüse in einer speziellen Ausgestaltung gerichtet, nämlich eine Blasdüse die auch dazu dient, den Kunststoffvorformling und insbesondere dessen Mündungsbereich während dessen Expansion zu kühlen. Dabei ist bevorzugt diese Beaufschlagungseinrichtung dazu auch geeignet, den Kunststoffvorformling, beziehungsweise das gefertigte Behältnis auch während eines Entlastungsvorgangs zu kühlen.

Die vorliegende Erfindung ist weiterhin auf ein Verfahren zum Umformen von Kunststoffvorformlingen zu Kunststoffbehältnissen gerichtet, wobei die Kunststoffvorformlinge innerhalb einer Blasform durch Beaufschlagung mit einem fließfähigen und insbesondere gasförmigen Medium expandiert werden und mittels einer Beaufschlagungseinrichtung mit dem fließfähigen Medium beaufschlagt und expandiert werden, wobei die Beaufschlagungseinrichtung an einem Mündungsbereich der Kunststoffvorformlinge angelegt wird, um diese mit dem fließfähigen Medium zu beaufschlagen.

Erfindungsgemäß bildet die Beaufschlagungseinrichtung wenigstens einen ersten Strömungskanal bzw. Strömungspfad für das fließfähige Medium aus, der wenigstens einen Anteil des fließfähigen Mediums an eine Innenwandung des Mündungsbereichs leitet und/oder lenkt, um diese Innenwandung zu temperieren und insbesondere zu kühlen.

Insbesondere lenkt die Beaufschlagungseinrichtung den Anteil des fließfähigen Mediums an einen Bereich der Mündung, in dem das Kunststoffmaterial wenig verstreckt werden soll, beziehungsweise in dem eine Wandung des Kunststoffmaterials dicker ist als in anderen Bereichen, bezogen auf das gefertigte Behältnis.

Weitere Vorteile und Ausführungsformen ergeben sich aus den beigefügten Zeichnungen. Darin zeigen:
- Fig. 1: Eine schematische Darstellung einer Umformungsstation;
- Fig. 2a: eine Darstellung einer Beaufschlagungseinrichtung, die auf einen Kunststoffvorformling aufgesetzt ist;
- Fig. 2b: eine Darstellung der Beaufschlagungseinrichtung mit einem daran angeordneten, expandierten Kunststoffbehältnis; und
- Fig. 3 - 10: unterschiedliche Ausgestaltungen einer Beaufschlagungseinrichtung bzw. Blasdüse.

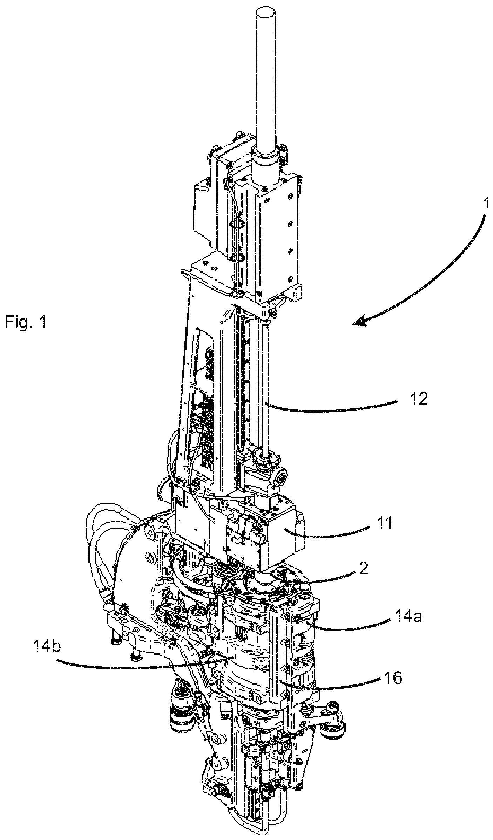

Figur 1 zeigt eine Darstellung einer Umformungsstation 1, bzw. einer Vorrichtung zum Umformen von Kunststoffvorformlingen zu Kunststoffbehältnissen. Diese weist dabei zwei Blasformträgerteile 14a, 14b auf, an denen (mittelbar oder unmittelbar) Blasformseitentele (nicht gezeigt) angeordnet sind. Diese Blasformteile bilden gemeinsam mit einem (ebenfalls nicht gezeigten) Bodenteil einen Hohlraum aus, innerhalb dessen die Kunststoffvorformlinge zu den Kunststoffbehältnissen expandiert werden. Das Bezugszeichen 16 kennzeichnet einen Verriegelungsmechanismus, der dazu dient, die Blasformen in einem geschlossenen Zustand zu verriegeln, insbesondere während des Expansionsprozesses.

Das Bezugszeichen 11 kennzeichnet einen Ventilblock, der hier eine Vielzahl von Ventilen aufweist, die zur Beaufschlagung der Kunststoffvorformlinge mit unterschiedlichen Druckstufen dienen. Das Bezugszeichen 2 kennzeichnet die Beaufschlagungseinrichtung zum Beaufschlagen der Kunststoffvorformlinge mit dem fließfähigen und insbesondere gasförmigen Medium. Diese Beaufschlagungseinrichtung ist dabei auf die Kunststoffvorformlinge zustellbar bzw. an eine Mündung der Kunststoffvorformlinge anlegbar.

Das Bezugszeichen 12 kennzeichnet einen stangenartigen Körper bzw. eine Reckstange, welche in das Innere der Kunststoffvorformlinge einführbar ist, um diese in ihrer Längsrichtung zu dehnen.

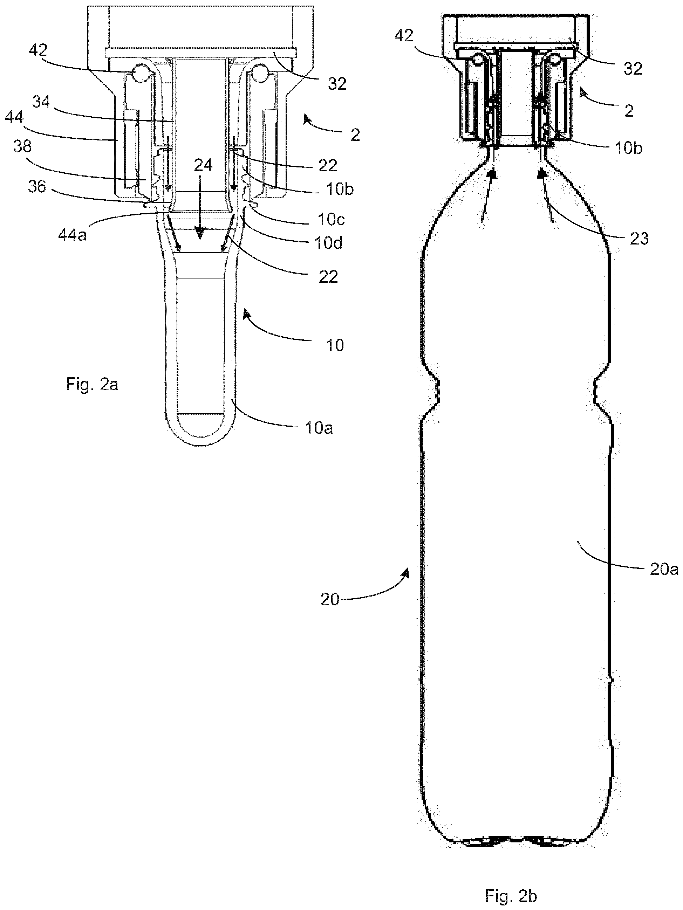

Figur 2a zeigt eine Darstellung der Beaufschlagungseinrichtung (im Folgenden auch als Blasdüse bezeichnet) 2, die hier an einem Kunststoffvorformling 10 anliegt während der Expansion des Kunststoffvorformlings. Dieser Kunststoffvorformling 10 weist dabei einen Grundkörper 10a auf, sowie einen Mündungsbereich 10b. An dem Mündungsbereich 10b ist ein Außengewinde oder eine Außenkontur angeordnet, auf das ein Behältnisverschluss aufschraubbar bzw. aufsteckbar ist.

Das Bezugszeichen 10c kennzeichnet einen Tragring des Kunststoffvorformlings und das Bezugszeichen 10d einen unterhalb dieses Tragrings angeordneten Bereich des Kunststoffvorformlings, der idealerweise durch die hier beschriebene Beaufschlagungseinrichtung 2 auch zu kühlen ist.

Die Blasdüse 2 weist dabei einen Hülsenkörper bzw. Umfangskörper 44 auf, innerhalb dessen eine Dichtungseinrichtung 38 in der vertikalen Richtung bewegbar ist, um so eine Abdichtung gegenüber dem Tragring 10c des Kunststoffvorformlings zu erreichen.

Das Bezugszeichen 34 kennzeichnet den oben beschriebenen röhrenförmigen Körper, der abschnittsweise während der Expansion des Kunststoffvorformlings in den Kunststoffvorformling hineinragt. Man erkennt hier, dass ein unteres Ende 44a dieses röhrenförmigen Körpers unterhalb des Tragrings 10c liegt. Bevorzugt liegt während der Expansion des Kunststoffvorformlings das Ende des röhrenförmigen Körpers in einem Bereich des Tragrings.

Bei einer weiteren bevorzugten Ausführungsform weist der röhrenförmige Körper einen Querschnitt auf, der ausreichend ist, um innerhalb des röhrenförmigen Körpers eine Reckstange zu bewegen. Bevorzugt wird daher eine Reckstange durch den röhrenförmigen Körper hindurch geführt.

Das Bezugszeichen 36 kennzeichnet eine Aufweitung des röhrenförmigen Körpers in der Art eines Spoilers, welche dazu dient, durch die Blasdüse einströmende Luft an die Bereiche 10d des Kunststoffvorformlings zu lenken. Damit weist bevorzugt der röhrenförmige Körper einen Endabschnitt mit einem sich erweiternden und insbesondere kontinuierlich erweiternden Querschnitt auf. Bevorzugt weist der röhrenförmige Körper einen kreisförmigen Querschnitt auf.

Der Strömungspfad der in den Kunststoffvorformling gelangenden Blasluft ist durch die Pfeile 22 dargestellt. Damit stellen die Pfeile 22 den ersten Strömungskanal dar, der zum Kühlen des Kunststoffvorformlings bzw. der Bereiche 10d dient. Insbesondere soll dabei ein Bereich der Innenwandung des Kunststoffvorformlings gekühlt werden, wie oben ausgeführt.

Damit verläuft bei der in Fig. 2a gezeigten Ausgestaltung der Beaufschlagungseinrichtung 2 der erste Strömungspfad zwischen dem röhrenförmigen Körper 34 bzw. dessen Innenwandung und dem Mündungsbereich des Kunststoffvorformlings bzw. dessen Außenwandung.

Das Bezugszeichen 24 kennzeichnet einen zweiten Strömungskanal, der hier entlang des röhrenförmigen Körpers 34 ebenfalls in das Innere des Kunststoffvorformlings strömt. Dieser Strömungskanal erreicht dabei direkt den Innenraum des Kunststoffvorformlings und wird anders als die Luft in dem Strömungskanal 22 nicht gezielt an die Innenwandung des Kunststoffvorformlings geführt. Bei der in Fig. 2a gezeigten Ausgestaltung umgibt daher der erste Strömungspfad 22 vollständig den zweiten Strömungspfad 24

Figur 2b zeigt eine Darstellung der Beaufschlagungseinrichtung bzw. Blasdüse 2, die hier an ein expandiertes Behältnis 20 angelegt ist wobei hier der Grundkörper 20a bereits aufgeblasen ist. Dabei bezeichnet das Bezugszeichen 23 den Rückströmpfad, über welchen die Luft beim Entlassen des Behältnisses wieder durch die Beaufschlagungseinrichtung 2 zurückströmt. Auch bei diesem Zurückströmen kann wieder ein Kühleffekt, insbesondere in dem Bereich 10d unterhalb des Tragrings 10c erreicht werden.

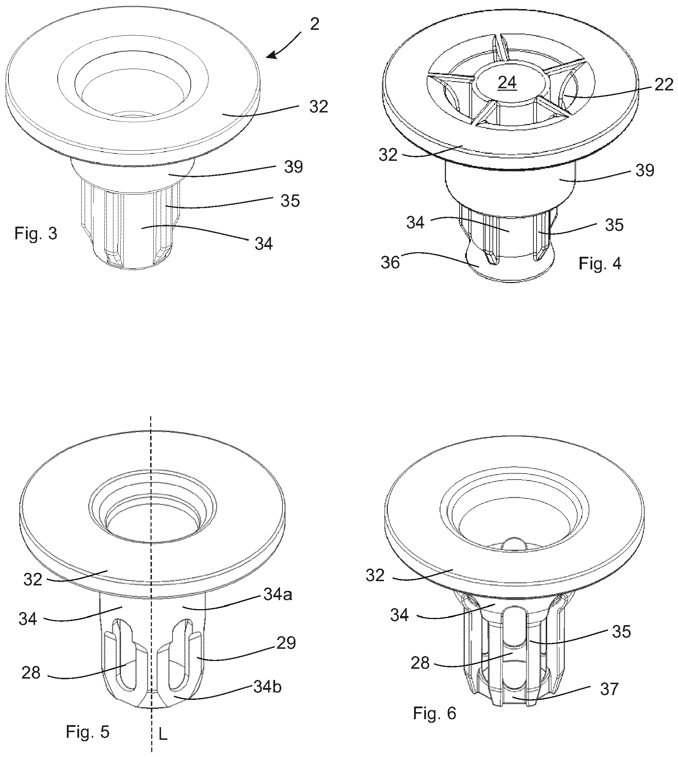

Figur 3 zeigt eine erste Ausgestaltung einer Beaufschlagungseinrichtung 2. Diese weist dabei einen Grundkörper 32 auf, an dem der röhrenförmige Körper 34 angeordnet ist. Bei der in Figur 3 gezeigten Ausführungsform ist ein zweiter Umfangskörper 39 dargestellt. Dabei wird der erste Strömungskanal hier auch durch den Zwischenraum zwischen einer Innenwandung des Umfangskörpers 39 und den röhrenförmigen Körper 34 gebildet. Das Bezugszeichen 35 kennzeichnet Stege, die hier auch zwischen dem röhrenförmigen Körper 34 und dem Umfangskörper 39 angeordnet sind. Diese Stege ragen dabei jeweils bezüglich des röhrenförmigen Körpers 34 radial nach außen.

Figur 4 zeigt eine weitere Ausgestaltung der Beaufschlagungseinrichtung 2. Auch hier sind wieder die Stege 35 vorgesehen, sowie auch der röhrenförmige Körper 34 sowie der Umfangskörper 39. Daneben ist auch wieder der Träger 32 vorgesehen, an dem diese beiden Körper angeordnet sind. Anders als bei der in Figur 3 gezeigten Ausführungsform erstrecken sich die Stege bei dieser Ausgestaltung auch bereits in einem oberen Bereich des Träger 32.

Man erkennt, dass hier der erste Strömungskanal 22 wiederum durch den Abstand zwischen dem röhrenförmigen Körper 34 und der Innenwandung des Umfangskörpers 39 ausgebildet ist. Der zweite Strömungskanal 24 verläuft im Inneren des röhrenförmigen Körpers 34. Auch eine (nicht gezeigte) Reckstange kann im Inneren des röhrenförmigen Körpers geführt werden.

Figur 5 zeigt eine weitere Ausführungsform einer Beaufschlagungseinrichtung 2. Auch hier ist wieder der Träger 32 vorgesehen, sowie der an diesen Träger angeordnete röhrenförmige Körper 34. Dieser weist dabei einen oberen Abschnitt 34a sowie einen unteren Abschnitt 34b auf. In dem unteren Abschnitt sind mehrere Öffnungen 28 angeordnet, durch welche die Luft (bzw. allgemein das fließfähige Medium) auch in einer radialen Richtung austreten kann, um so die Innenwandung des Kunststoffvorformlings zu kühlen. Auch hier erfolgt eine Kühlung insbesondere auch in den Bereichen unterhalb des Tragrings.

Das Bezugszeichen 29 kennzeichnet eine abgeflachte Wandung, an der die Öffnungen 28 angeordnet sind. Diese Wandungen erleichtern die Strömung der Luft in den Kunststoffvorformlings.

Damit wird bei der in Figur 5 gekennzeichneten Ausführungsform eine Aufspaltung des ersten und zweiten Strömungspfads erst im unteren Bereich des röhrenförmigen Körpers 34 erreicht, nämlich im Bereich der Öffnungen. Ein der Teil der Luft tritt durch die Öffnungen 28 radial aus, wodurch der erste Strömungskanal bzw. Strömungspfad 22 gebildet wird. Der erste Strömungskanal bzw. Strömungspfad 24 kann durch die zentrale Öffnung im unteren Bereich 34b des röhrenförmigen Körpers 34 gebildet werden.

Es wäre jedoch in einer Ausführungsform auch möglich, dass der röhrenförmige Körper an seiner Unterseite geschlossen oder insbesondere nahezu geschlossen ist (d.h. im Wesentlichen nur noch das Hindurchführen der Reckstange ermöglicht) ist und auf diese Weise die Luft ausschließlich durch die Öffnungen 28 austritt. So wäre es auch denkbar, dass zwischen einer Reckstange und dem röhrenförmigen Körper eine Dichtung vorgesehen ist. Daneben wäre es auch denkbar, dass ein innerer Abschnitt des röhrenförmigen Körpers konisch zulaufend ausgebildet ist.

Figur 6 zeigt eine weitere Ausführungsform einer erfindungsgemäßen Beaufschlagungseinrichtung. Auch hier sind an dem röhrenförmigen Körper wiederum Öffnungen 28 vorgesehen, wobei hier der röhrenförmige Körper im Wesentlichen durch die Stege 35 und einem ringförmigen Abschnitt 37 ausgebildet ist.

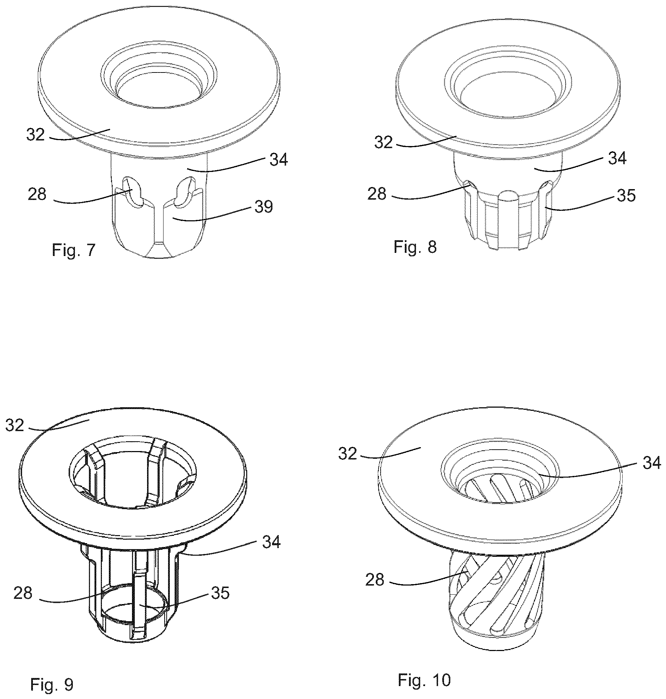

Figur 7 zeigt eine weitere Ausführungsform einer erfindungsgemäßen Beaufschlagungseinrichtung. Auch hier sind mehrere, genauer gesagt vier, Öffnungen 28 vorgesehen, durch welche Luft in einer radialen Richtung austreten kann und auf diese Weise die Innenwandung des Kunststoffvorformlings kühlen kann. Unterhalb dieser Öffnungen befinden sich wiederum ebene Flächen 39, welche das Austreten der strömenden Luft begünstigen.

Bei der in Figur 8 gezeigten Ausführungsform ist wiederum eine Vielzahl von Stegen vorgesehen. Die Öffnungen liegen hier in einem oberen Abschnitt des röhrenförmigen Körpers 34 bzw. in einem Bereich, an dem die Stege 35 beginnen und durch diese Öffnungen kann die Luft auch in der radialen Richtung austreten.

Figur 9 zeigt eine weitere Ausgestaltung einer erfindungsgemäßen Beaufschlagungseinrichtung. Bei dieser Ausgestaltung wird der röhrenförmige Körper durch eine Vielzahl von Stegen ausgebildet, zwischen denen Abstände bestehen, welche die Öffnungen 28 ausbilden. Damit tritt ein (nämlich der zweite) Strömungspfad der Luft wieder in einer vertikalen Richtung nach unten aus, während ein anderer (nämlich der erste) Strömungspfad radial nach außen austritt. Bei der in Figur 9 gezeigten Ausführungsform tritt ein überwiegender Anteil der Blasluft durch die Öffnungen 28 bzw. die Zwischenräume zwischen den Stegen 35 aus.

Bei der in Figur 10 gezeigten Ausführungsform sind ebenfalls Öffnungen 28 vorgesehen, wobei diese sich hier jedoch spiralartig nach unten erstrecken, das heißt eine Längsrichtung dieser Öffnungen erstreckt sich hier nicht in einer vertikalen Richtung, sondern in einer spitalförmigen Richtung. Der röhrenförmige Körper 34 ist jedoch auch hier an dem Träger 32 angeordnet. Durch die spiralförmige Ausgestaltung der Öffnungen wird ein Verdrallen der Strömungswege erreicht.

Bevorzugt ist bei den gesamten gezeigten Ausführungsformen ein Träger vorgesehen (hier mit den Bezugszeichen 32 versehen), an den der oben erwähnte röhrenförmige Körper angeordnet ist.

### Bezugszeichenliste

- 1: Umformungsstation
- 2: Beaufschlagungseinrichtung/Blasdüse
- 10: Kunststoffvorformling
- 10a: Grundkörper
- 10b: Mündungsbereich
- 10c: Tragring
- 10d: Bereich unterhalb des Tragrings
- 11: Ventilblock
- 12: stangenartiger Körper
- 14a, 14b: Blasformträgerteile
- 16: Verriegelungsmechanismus
- 22: Pfeile Luftströmungsrichtung/erster Strömungskanal
- 23: Rückströmpfad
- 24: zweiter Strömungskanal
- 28: Öffnungen
- 29: abgeflachte Wandung
- 32: Träger
- 34: röhrenförmiger Körper
- 34a: oberer Abschnitt
- 34b: unterer Abschnitt
- 35: Stege
- 36: Aufweitung/Spoiler
- 37: ringförmiger Abschnitt
- 38: Dichtungseinrichtung
- 39: zweiter Umfangskörper/ebene Flächen
- 44: Hülsenkörper/Umfangskörper
- 44a: Ende des röhrenförmigen Körpers

## Patentansprüche

1. Vorrichtung zum Umformen von Kunststoffvorformlingen (10) zu Kunststoffbehältnissen (20) mit einer Blasform (14), welche einen Hohlraum ausbildet, innerhalb dessen die Kunststoffvorformlinge (10) zu den Kunststoffbehältnissen expandierbar sind und mit einer Beaufschlagungseinrichtung (2), welche dazu geeignet und bestimmt ist, die Kunststoffvorformlinge mit einem fließfähigen Medium zu beaufschlagen, um sie zu expandieren, wobei die Beaufschlagungseinrichtung (2) an einen Mündungsbereich der Kunststoffvorformlinge anlegbar ist, um diese mit dem fließfähigen Medium zu beaufschlagen,
**dadurch gekennzeichnet, dass**
die Beaufschlagungseinrichtung (2) wenigstens einen ersten Strömungskanal (22) für das fließfähige Medium ausbildet, der wenigstens einen Anteil des fließfähigen Mediums an eine Innenwandung des Mündungsbereichs (10d) leitet und/oder lenkt, um diese Innenwandung zu temperieren und insbesondere zu kühlen.

2. Vorrichtung nach Anspruch 1,
**dadurch gekennzeichnet, dass**
die Beaufschlagungseinrichtung (2) wenigstens zwei wenigstens teilweise voneinander getrennte Strömungspfade (22, 24) für das fließfähige Medium ausbildet, wobei wenigstens einer dieser Strömungspfade derart ausgebildet ist, dass er wenigstens einen Anteil des fließfähigen Mediums an eine Innenwandung des Mündungsbereichs leitet und/oder lenkt.

3. Vorrichtung nach Anspruch 2,
**dadurch gekennzeichnet, dass**
der zweite Strömungspfad (24) derart ausgebildet ist, dass er das fließfähige Medium nicht auf eine Innenwandung des Mündungsbereichs leitet.

4. Vorrichtung nach wenigstens einem der vorangegangenen Ansprüche,
**dadurch gekennzeichnet, dass**
die Beaufschlagungseinrichtung (2) einen während einer Expansion des Kunststoffvorformlings in diesen Kunststoffvorformling (10) ragenden röhrenförmigen Körper (34) aufweist, der denjenigen Strömungspfad des fließfähigen Mediums ausbildet, der nicht auf die Innenwandung des Mündungsbereichs gelangt.

5. Vorrichtung nach dem vorangegangenen Anspruch,
**dadurch gekennzeichnet, dass**
der röhrenförmige Körper (34) rotationssymmetrisch bezüglich einer Längsachse (L) der Beaufschlagungseinrichtung (2) ausgebildet ist.

6. Vorrichtung nach dem vorangegangenen Anspruch,
**dadurch gekennzeichnet, dass**
der erste Strömungspfad (22) wenigstens teilweise radial außerhalb des zweiten Strömungspfads (24) verläuft.

7. Vorrichtung nach wenigstens einem der vorangegangenen Ansprüche 5 - 6,
**dadurch gekennzeichnet, dass**
der erste Strömungspfad (22) den zweiten Strömungspfad (24) in einer Umfangsrichtung der Beaufschlagungseinrichtung (2) umgibt.

8. Vorrichtung nach wenigstens einem der vorangegangenen Ansprüche,
**dadurch gekennzeichnet, dass**
der erste Strömungspfad (22) durch einen Abstand zwischen dem röhrenförmigen Körper (34) und einer diesen röhrenförmigen Körper (34) umgebenden Wandung (39) gegeben ist.

9. Vorrichtung nach wenigstens einem der vorangegangenen Ansprüche,
**dadurch gekennzeichnet, dass**
der röhrenförmige Körper (34) wenigstens eine Öffnung (28) aufweist, durch welche das Medium in einer radialen Richtung austreten kann, wobei diese Öffnung (28) einen Abschnitt des ersten Strömungspfads (28) ausbildet.

10. Vorrichtung nach dem vorangegangenen Anspruch,
**dadurch gekennzeichnet, dass**
die Öffnung ein Langloch (28) ist.

11. Beaufschlagungseinrichtung (2) für eine Vorrichtung nach Anspruch 1 zum Beaufschlagen von Kunststoffvorformlingen (10) mit einem gasförmigen Medium, um diese Kunststoffvorformlinge (10) zu expandieren, mit einem ringförmigen Abdichtabschnitt, der dazu geeignet und bestimmt ist, während der Beaufschlagung des Kunststoffvorformlings (10) mit dem gasförmigen Medium den in den Kunststoffvorformling (10) gelangenden Luftstrom gegenüber einer Umgebung abzudichten, und mit einem röhrenförmigen Körper (34), der während des Expansionsvorgangs wenigstens teilweise in den zu expandierenden Kunststoffvorformling (10) hineinragt,
**dadurch gekennzeichnet, dass**
die Beaufschlagungseinrichtung (2) wenigstens einen ersten Strömungskanal (22) für das fließfähige Medium ausbildet, der wenigstens einen Anteil des fließfähigen Mediums an eine Innenwandung des Mündungsbereichs (10b) leitet und/oder lenkt, um diese Innenwandung zu temperieren und insbesondere zu kühlen.

12. Verfahren zum Umformen von Kunststoffvorformlingen (10) zu Kunststoffbehältnissen (20), wobei die Kunststoffvorformlinge (10) innerhalb einer Blasform (14) durch Beaufschlagung mit einem fließfähigen und insbesondere gasförmigen Medium expandiert werden und mittels einer Beaufschlagungseinrichtung (2) mit dem fließfähigen Medium expandiert werden, wobei die Beaufschlagungseinrichtung (2) an einen Mündungsbereich der Kunststoffvorformlinge (10) angelegt wird, um diese mit dem fließfähigen Medium zu beaufschlagen,
**dadurch gekennzeichnet, dass**
die Beaufschlagungseinrichtung (2) wenigstens einen ersten Strömungskanal (22) für das fließfähige Medium ausbildet, der wenigstens einen Anteil des fließfähigen Mediums an eine Innenwandung des Mündungsbereichs (10b) leitet und/oder lenkt, um diese Innenwandung zu temperieren und insbesondere zu kühlen

## Claims

1. Apparatus for forming plastic preforms (10) into plastic containers (20), having a blow mould (14) which forms a cavity within which the plastic preforms (10) can be expanded to form the plastic containers, and with an application device (2) which is suitable and intended for acting upon the plastic preforms with a flowable medium in order to expand them, wherein the application device (2) can be placed against a mouth area of the plastic preforms in order to act upon these with the flowable medium,
**characterised in that**
the application device (2) forms at least one first flow channel (22) for the flowable medium which guides and/or directs at least a portion of the flowable medium to an inner wall of the mouth area (10d) in order to temper and in particular to cool this inner wall.

2. Apparatus according to claim 1,
**characterised in that**
the application device (2) forms at least two flow paths (22, 24) for the flowable medium, which are at least partially separated from one another, wherein at least one of these flow paths being designed in such a way that it guides and/or directs at least a portion of the flowable medium to an inner wall of the mouth area.

3. Apparatus according to claim 2,
**characterised in that**
the second flow path (24) is designed in such a way that it does not direct the flowable medium onto an inner wall of the mouth area.

4. Apparatus according to at least one of the preceding claims,
**characterised in that**
the application device (2) has a tubular body (34) which projects into the plastic preform (10) during an expansion of the plastic preform and which forms that flow path of the flowable medium which does not reach the inner wall of the mouth area.

5. Apparatus according to the preceding claim,
**characterised in that**
the tubular body (34) is rotationally symmetrical with respect to a longitudinal axis (L) of the application device (2).

6. Apparatus according to the preceding claim,
**characterised in that**
the first flow path (22) extends at least partially radially outside the second flow path (24).

7. Apparatus according to at least one of the preceding claims 5-6,
**characterised in that**
the first flow path (22) surrounds the second flow path (24) in a circumferential direction of the application device (2).

8. Apparatus according to at least one of the preceding claims,
**characterised in that**
the first flow path (22) is given by a distance between the tubular body (34) and a wall (39) surrounding this tubular body (34).

9. Apparatus according to at least one of the preceding claims,
**characterised in that**
the tubular body (34) comprises at least one opening (28) through which the medium can exit in a radial direction, wherein said opening (28) forming a portion of the first flow path (28).

10. Apparatus according to the preceding claim,
**characterised in that**
the opening is an elongated hole (28).

11. Application device (2) for an apparatus according to claim 1 for acting upon plastic preforms (10) with a gaseous medium in order to expand these plastic preforms (10), having an annular sealing section which is suitable and intended, during the application of the plastic preform (10) with the gaseous medium, to seal off the air flow entering the plastic preform (10) from an environment, and having a tubular body (34), which during the expansion process projects at least partially into the plastic preform (10) to be expanded,
**characterised in that**
the application device (2) forms at least one first flow channel (22) for the flowable medium, which guides and/or directs at least a portion of the flowable medium to an inner wall of the mouth area (1 0b) in order to temper and in particular to cool this inner wall.

12. Method for forming plastic preforms (10) into plastic containers (20), wherein the plastic preforms (10) are expanded within a blow mould (14) by being acted upon by a flowable and, in particular, gaseous medium and are expanded by means of an application device (2) with the flowable medium, wherein the application device (2) is placed against a mouth area of the plastic preforms (10) in order to act upon these with the flowable medium,
**characterised in that**
the application device (2) forms at least one first flow channel (22) for the flowable medium which guides and/or directs at least a portion of the flowable medium to an inner wall of the mouth area (10b) in order to temper and in particular to cool this inner wall.

## Revendications

1. Dispositif de façonnage de préformes en matière plastique (10) en récipients en matière plastique (20) avec un moule de soufflage (14), lequel réalise un espace creux, à l'intérieur duquel les préformes en matière plastique (10) peuvent être expansées en récipients en matière plastique, et avec un système d'application de contrainte (2), lequel est adapté pour et se destine à soumettre les préformes en matière plastique à l'action d'un milieu coulant pour les expanser, dans lequel le système d'application de contrainte (2) peut être placé sur une zone d'embouchure des préformes en matière plastique pour les soumettre à l'action du milieu coulant,
**caractérisé en ce que**
le système d'application de contrainte (2) réalise au moins un premier canal d'écoulement (22) pour le milieu coulant, qui achemine et/ou dirige au moins une partie du milieu coulant à une paroi intérieure de la zone d'embouchure (10d) pour thermoréguler ladite paroi intérieure et en particulier pour la refroidir.

2. Dispositif selon la revendication 1,
**caractérisé en ce que**
le système d'application de contrainte (2) réalise au moins deux trajets d'écoulement (22, 24) séparés au moins en partie l'un de l'autre pour le milieu coulant, dans lequel au moins un desdits trajets d'écoulement est réalisé de telle manière qu'il achemine et/ou dirige au moins une partie du milieu coulant à une paroi intérieure de la zone d'embouchure.

3. Dispositif selon la revendication 2,
**caractérisé en ce que**
le deuxième trajet d'écoulement (24) est réalisé de telle manière qu'il n'achemine pas le milieu coulant sur une paroi intérieure de la zone d'embouchure.

4. Dispositif selon au moins l'une quelconque des revendications précédentes,
**caractérisé en ce que**
le système d'application de contrainte (2) présente un corps tubulaire (34) dépassant dans ladite préforme en matière plastique (10) au cours d'une expansion de ladite préforme en matière plastique, lequel réalise le trajet d'écoulement du milieu coulant, qui précisément n'arrive pas sur la paroi intérieure de la zone d'embouchure.

5. Dispositif selon la revendication précédente,
**caractérisé en ce**
**que** le corps tubulaire (34) est réalisé de manière symétrique en rotation par rapport à un axe longitudinal (L) du système d'application de contrainte (2).

6. Dispositif selon la revendication précédente,
**caractérisé en ce que**
le premier trajet d'écoulement (22) s'étend au moins en partie radialement à l'extérieur du deuxième trajet d'écoulement (24).

7. Dispositif selon au moins l'une quelconque des revendications précédentes 5 - 6,
**caractérisé en ce que**
le premier trajet d'écoulement (22) entoure le deuxième trajet d'écoulement (24) dans un sens périphérique du système d'application de contrainte (2).

8. Dispositif selon au moins l'une quelconque des revendications précédentes,
**caractérisé en ce que**
le premier trajet d'écoulement (22) est donné par une distance entre le corps tubulaire (34) et une paroi (39) entourant ledit corps tubulaire (34).

9. Dispositif selon au moins l'une quelconque des revendications précédentes,
**caractérisé en ce que**
le corps tubulaire (34) présente au moins une ouverture (28), par laquelle le milieu peut entrer dans une direction radiale, dans lequel ladite ouverture (28) réalise une section du premier trajet d'écoulement (28).

10. Dispositif selon la revendication précédente,
**caractérisé en ce que**
l'ouverture est un trou oblong (28).

11. Système d'application de contrainte (2) pour un dispositif selon la revendication 1 destiné à soumettre des préformes en matière plastique (10) à l'action d'un milieu gazeux pour expanser lesdites préformes en matière plastique (10), avec une section d'étanchéification annulaire, qui est adaptée pour et se destine à étanchéifier le flux d'air arrivant dans la préforme en matière plastique (10) par rapport à un environnement lorsque la préforme en matière plastique (10) est soumise à l'action du milieu gazeux, et avec un corps tubulaire (34), qui dépasse au moins en partie à l'intérieur de la préforme en matière plastique (10) à expanser au cours de l'opération d'expansion,
**caractérisé en ce que**
le système d'application de contrainte (2) réalise au moins un premier canal d'écoulement (22) pour le milieu coulant, qui achemine et/ou dirige au moins une partie du milieu coulant à une paroi intérieure de la zone d'embouchure (10b) pour thermoréguler ladite paroi intérieure et en particulier pour la refroidir.

12. Procédé de façonnage de préformes en matière plastique (10) en des récipients en matière plastique (20), dans lequel les préformes en matière plastique (10) sont expansées à l'intérieur d'un moule de soufflage (14) par l'action exercée par un milieu coulant et en particulier gazeux et sont expansées au moyen d'un système d'application de contrainte (2) avec le milieu coulant, dans lequel le système d'application de contrainte (2) est placé sur une zone d'embouchure des préformes en matière plastique (10) pour soumettre celles-ci à l'action du milieu coulant,
**caractérisé en ce que**
le système d'application de contrainte (2) réalise au moins un premier canal d'écoulement (22) pour le milieu coulant, qui achemine et/ou dirige au moins une partie du milieu coulant à une paroi intérieure de la zone d'embouchure (10b) pour thermoréguler ladite paroi intérieure et en particulier pour la refroidir.
